Europäisches Patentamt

European Patent Office

Office européen des brevets

(19)

(11) Veröffentlichungsnummer: **0 081 865**
**B2**

(12) **NEUE EUROPÄISCHE PATENTSCHRIFT**

(45) Veröffentlichungstag der neuen Patentschrift:
**03.10.90**

(51) Int. Cl.[5]: **H 02 G 1/12**

(21) Anmeldenummer: **82201382.7**

(22) Anmeldetag: **04.11.82**

(54) **Abisoliergerät.**

(30) Priorität: **14.12.81 DE 3149426**

(43) Veröffentlichungstag der Anmeldung:
**22.06.83 Patentblatt 83/25**

(45) Bekanntmachung des Hinweises auf die
Patenterteilung:
**28.01.87 Patenblatt 87/05**

(45) Bekanntmachung des Hinweises auf die
Entscheidung u¨ber den Einspruch:
**03.10.90 Patentblatt 90/40**

(84) Benannte Vertragsstaaten:
**DE FR GB IT SE**

(56) Entgegenhaltungen:
**DE-A-2 059 652**
**DE-A-2 434 250**
**DE-A-2 851 516**
**DE-C- 718 669**
**US-A-3 071 033**
**US-A-3 387 514**
**US-A-3 822 470**

(73) Patentinhaber: **C.A. Weidmüller GmbH & Co.**
**Postfach 950 Paderborner Strasse 175**
**D-4930 Detmold 14 (DE)**

(72) Erfinder: **Undin, Hans**
**Stora Skogrundan 55**
**S-184 00 Akersberga (SE)**
Erfinder: **Wiener, Hans**
**Drakskeppsvägen 10**
**S-183 63 Täby (SE)**

(74) Vertreter: **Klauber, Tomas**
**Patentbyran Klauber & Co. AB Kungstensgatan**
**48**
**S-113 59 Stockholm (SE)**

EP 0 081 865 B2

## Beschreibung

Die Erfindung bezieht sich auf ein Abisoliergerät für Leiter, die mit einer Isolationsschicht versehen sind und kreisrunden Querschnitt aufweisen, und zwar ein Gerät der Art, wie es im Oberbegriff des Patentanspruchs 1 bzw. 5 angegeben ist.

Ein derartiges Gerät ist z.B. in der DE—A—2 059 652 beschrieben und weist eine Vielzahl von in schwenkbaren Messerhaltern angeordneten Messern auf, wobei die Messerhalter gemeinsam mit einem Auflagerorgan für einen drehfest festgehaltenen Leiter von einem Elektromotor in Drehung versetzt werden können. Die Messerhalter werden einerseits von Zugfedern beaufschlagt, welche sie dauernd in eine vom Auflager entfernte Schwenklage (Ruhelage) zwingen, und sind anderseits mit Fliehgewichten versehen, welche durch die Einwirkung der bei der Drehbewegung entstehenden Fliehkraft die Wirkung der Federn überwinden. Die Fliehgewichte, welche ein Vorschuborgan bilden von dem die Messer zum Einschnitt gezwungen werden, müssen hierbei nicht nur die Wirkung der Federn überwinden, sondern darüber hinaus auch die Messer in die eventuell recht zähen Umhüllungsschichten (Isolation und Abschirmung des Leiters) hineinpressen. Dazu sind Drehgeschwindigkeiten von nur motorisch erreichbarer Höhe, und gegenbenenfalls auch noch ziemlich grosse Fliehmassen erforderlich.

Ein anderes Gerät ähnlicher Art ist in der US—A—3 071 033 beschrieben. Ein Vielzahl von Messern ist in einem Messerhalter angeordnet der von einem ein Vorschuborgan für die Messer bildenden Blattfederorgan dauernd in Eingriffslage mit einem Leiter gezwungen wird, der in einem gemeinsam mit dem Messerhalter drehbaren Auflageorgan ruht ohne die Drehbewegung mitzumachen. Das Auflagerorgan und der Messerhalter werden von einem mit Druckmedium gespeisten Turbinenorgan in Drehung versetzt, aber der Einschnittvorgang als solcher und sein Verlauf ist bei diesem Gerät unabhängig von der Drehbewegung, deren Zweck bloss das Erweitern des Einschnittes auf den ganzen Umfang des Leiters ist. Zur Überwindung der Wirkung des Blattfederorganes, um den Messerhalter in eine das Einlegen eines Leiters ermöglichende Ruhelage radial verschieben zu können, ist ein Solenoidorgan vorgesehen. Das Gerät erfordert somit Speisung sowohl mit Druckluft etc., wie mit elektrischem Strom.

In der DE—C—718 669 schliesslich ist ein Abisoliergerät beschrieben, bei dem zwei in radial verschiebbaren Messerträgern angeordnete Abisoliermesser derart in die Isolation eines bearbeiteten Leiters eingezwungen werden, dass die Messerträger von Führungsflächen beaufschlagt werden. Die Führungsflächen bilden dadurch ein Vorschuborgan, welches ausschliesslich von einer mittels mechanischer Kraftübertagung (zwischen den Führungsflächen und den Messerträgern) von der Drehbewegung eines Tragorgans (welches durch Handbetätigung drehbar ist) abgeleiteten Kraft beaufschlagbar ist. Das Einzwingen der Messer in die Isolation hat unter einem Bruchteil einer einzigen Umdrehung zu erfolgen, was in der Praxis nur die Bearbeitung von dünnen und nachgiebigen Isolationsschichten gestattet.

Die vorliegende Erfindung stellt sich die Aufgabe, ein Gerät der angegebenen Art, insbesondere in dem Sinne zu verbessern, dass auch ziemlich dicke (z.B. bis zu 5 mm) und zähe Umhüllungsschichten mit einem in Abhängigkeit vom Fortschreiten der Drehbewegung allmählich sich vertiefenden Einschnitt durchtrennt werden können, und zwar bei Drehgeschwindigkeiten die nicht nur mit Hilfe eines Motors, sondern jeweils auch von Hand aus, (z.B. an Montagestellen ausserhalb von Betriebsräumen), erreichbar sind.

In einer bevorzugten Ausführungsform soll eine konstruktions- und bedienungsmässig äusserst einfache Einstellmöglichkeit des Tempos, mit dem das oder die Messer im Verlauf einer beliebig schnellen oder langsamen Drehbewegung in die Umhüllungsschichten des Leiters bis zu einer vorbestimmten Einschnittsendlage eindringen, gegeben sein.

Die Erfindung weist die im kennzeichnenden Teil des Patentanspruchs 1 bzw. 5 angegebenen Merkmale auf, wobei in den Unteransprüchen vorteilhafte Weiterentwicklungen angegeben sind.

Die Erfindung soll nun an Hand von Ausführungsbeispielen gemäss den beigefügten schematischen Zeichnungen näher erläutert werden. Hierbei ziegt

Fig 1 eine erste Ausführungsform in Vorderansicht,

Fig. 2 einen Längsschnitt durch die Anordnung gemäss Fig. 1,

Fig. 3 eine zweite Ausführungsform in Vorderansicht,

Fig. 4 einen Querschnitt in grösserem Masstab durch eine dritte Ausführungsform,

Fig. 5 einen Längsschnitt durch die Anordnung gemäss Fig. 4,

Fig. 6 die Vorderansicht der Anordnung gemäss Fig. 4 und 5,

Fig. 7 die Draufsicht auf das Schwenkzapfenorgan in der Anordnung gemäss Fig. 4 bis 6,

Fig. 8 eine alternative Ausführungsform eines Abisoliermessers für die Anordnungen gemäss Fig. 1 und 2 oder 4 bis 7,

Fig. 9 eine alternative Ausführungsform eines Anschlagorgans in der Anordnung gemäss Fig. 4 bis 7, und

Fig. 10 eine alternative Ausführungsform der Steuerorgane in der Anordnung gemäss Fig. 4—7.

Bestandteile mit gleicher Funktion sind in allen Zeichnungsfiguren mit gleichen oder analogen Bezugszeichen bezeichnet.

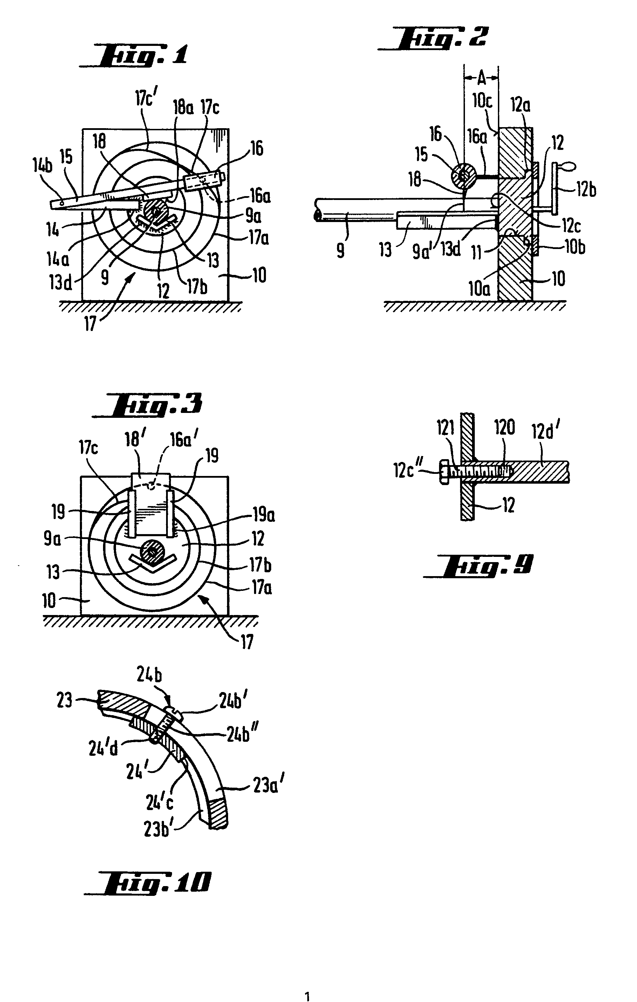

Gemäss Fig. 1 und 2 ist in einer kreisrunden Öffnung 11 in einem nicht drehbaren, ortsfesten Ständer 10 eine kreisrunde Grundplatte oder Grundscheibe 12 drehbar gelagert. Die Grundplatte weist einen Endflansch 12a auf, der in eine entsprechende kreisrunde Aussparung 10a im Ständer 10 hineinpasst und von einem Sicherungsring 10b, der am Ständer festgeschraubt oder festgeklebt sein kann, axial festgehalten wird. Die Grundplatte 12 ist mit einer Handkurbel 12b als Antriebsorgan versehen. An der der Handkurbel 12b abgewendeten Stirnfläche der Grundplatte 12 ist ein axial verlaufendes Auflager 13 in Form eines Troges mit V-förmigem Profil, z.B. durch Festschweissen an der Stelle 13d, befestigt. Der Trog ist auf der Grundplatte konzentrisch angeordnet, bzw. so, dass sich ein eingelegter Leiter 9 in konzentrischer Lage befindet. Diese Bedingung braucht jedoch nicht streng eingehalten zu werden, und insbesondere sind diejenigen Abweichungen belanglos, die durch die Verschiedenheit der Leiterquerschnitte verursacht sind. Im allgemeinen kann man sagen, dass dar Auflager im zentralen Bereich der Grundplatte anzuordnen ist.

An der Grundplatte 12 ist ferner ein ausschweifender Haltearm 14 mit seinem einer Ende befestigt, z.B. durch Festschweissen an der Stelle 14a. An seinem anderen Ende trägt der Haltearm 14 einen Schwenkzapfen 14b für den Anschluss eines länglichen Trägerarmes 15. Am Trägerarm 15 ist in vorgewähltem axialem Abstand A von der Grundplatte 12, der der Abstreiflänge für die Isolationsschicht entspricht, eine Hülse 16 mit einem Abtaststift 16a axial gleitend angeordnet und ferner ein Abisoliermesser 18 fest montiert, dessen wirksamer Schneidkantenteil 18a sich im Bereiche des Auflagers 13 befindet. Der Trägerarm 15 und das Abisoliermesser 18 bilden ein Messerorgan. Der gewünschte Abstand A der Hülse 16 kann entweder dadurch erreicht werden, dass der Schwenkzapten 14b entsprechend lang gewählt wird, oder dass zumindest der Haltearm 14 oder der Trägerarm 15 in seinem mittleren Bereich zweimal abgebogen ist.

Auf der Stirnfläche 10c des Ständers 10 ist um die kreisrunde Öffnung 11 herum ein Leitspurensystem 17 von vertieften Leitspuren für den an der Hülse 16 angebrachten Abtastift 16a angeordnet. Das Leitspurensystem umfasst eine äussere kreisrunde Spur 17a, eine innere kreisrunde Spur 17b und eine Übergangsspur 17c, die mit gewählter Steigung die beiden kreisrunden Spuren 17a und 17b miteinander verbindert. Das Leitspurensystem 17 bildet ein Vorschuborgan und der Abtaststift 16a bildet ein Eingriffsorgan. Die Länge des Abtastiftes 16a entspricht dem Abstand A minus halbem Durchmesser der Hülse 16 plus Tiefe der Spuren 17a—17c. Die Spitze des Abtaststiftes 16a greift somit normalerweise immer in die Spuren 17a—17c ein.

Die Anordnung arbeitet in folgender Weise. Ein abzuisolierender Leiter 9 kreisrunden Querschnittes wird in das Auflager 13 eingeführt bis er mit seinem Ende an die Grundplatte 12 anstösst. Der dem Auflager 13 benachbarte Teil 12c der Stirnfläche der Grundplatte 12 wirkt somit als ein Endanschlag für den Leiter 9. Der Benutzer hält danach den Leiter 9 mit der einen Hand fest und betätigt mit der anderen Hand die Kurbel 12b im Uhrzeigersinn. Das hat zur Folge , das der Abtaststift 16a von der äusseren kreisrunden Spur 17a in die Übergangsspur 17c übergeht — dieser Zustand ist in Fig. 1 dargestellt — und hierbi allmählich, je nach der gewählten Steigung der Übergangsspur 17c, die sich u.U. auch über mehrere Umdrehungen erstrecken kann, in die innere kreisrunde Spur 17b übergeleitet wird.

Das Auflager 13 dreht sich zusammenen mit der Grundplatte 12 um den Leiter 9 herum, der vom Abisoliermesser 18 gegen das Auflager 13 gedrückt wird, und die Hülse 16 verschiebt sich am Trägerarm 15 im Ausmass des Unterschiedes zwischen den Halbmessern der beiden Spuren 17a und 17b. Das am Trägerarm 15 fest angeordnete Abisoliermesser 18 wird mit seinem wirksamen Schneidenteil 18a in die Isolationsschicht 9a des Leiters 9 eingepresst, und zwar in einem Tempo, welches von der Steigung der Übergangsspur 17c bestimmt ist, und erzeugt hierbei einen Einschnitt 9a' entlang des ganzen Umfangs der Isolationsschicht 9a. Die äussere kreisrunde Spur 17a bestimmt somit eine unwirksame äussere Ruhelage des Abisoliermessers 18 und die innere kreisrunde Spur 17b bestimmt eine innere Einschnittsendlage des Abisoliermessers 18, die sich in vorgewählter Annäherund an das Auflager 13 befindet. Zwischen diesen beiden Lagen befindet sich u.a. die in Fig. 1 dargestellte Lage des Abisoliermessers, in der es die Isolationsschicht 9a des Leiters eben berührt.

Die jeweilige Eingriffsstelle des Abtaststiftes 16a mit dem Leitspurensystem 17 bildet eine Angriffsstelle des Eingriffgliedes, die sich während und zufolge der Drehbewegung radial verlagert.

Nachdem der Schneidkantenteil 18a die Einschnittsendlage erreicht hat, ist es im allgemeinen ratsam, zumindest eine weitere volle Umdrehung durchzuführen, damit die Tiefe der Einschnittsendlage entlang des ganzen Umfanges der Isolationsschicht erreicht wird. Bei sehr allmählicher Heranführung des Abisoliermessers in die Einschnittsendlage (d.h. im dargestellten Beispiel bei sehr geringer, über mehrere Umdrehungen sich erstreckender Steigung der Übergangsspur 17c) kann der Tiefenunterschied zwischen dem Anfang und dem Ende der letzten Umdrehung, während der eine Messerannäherung stattfindet, so gering sein, dass eine weitere Umdrehung nicht unbedingt erforderlich ist.

Nach Beendigung des Schneidvorganges wird entweder die Handkurbel 12b im entgegenesetzten Sinne gedreht, um den Abtaststift 16a über die Übergangsspur 17c wieder in die äussere kreisrunde Spur 17a zu bringen, oder es kann zur Rückführung des Abtaststiftes 16a eine zweite, im verkehrten Sinne verlaufende Übergangsspur 17c' angeordnet werden.

Bei der alternativen Ausführungsform gemäss Fig. 3 ist in gewähltem axialem Abstand von der Stirnfläche der Grundplatte 12 ein Abisoliermesser 18' in einer mit der Grundplatte 12 an der Stelle 19a, z.B. fest verbundenen Schwalbenschwanzführung 19, radial gleitend angeordnet.

Der in das Spurensystem 17 eingreifende Abtaststift 16a' ist direkt im Abisoliermesser 18' verankert. Die Angriffsstelle des Eingrifforgans verlagert sich bloss radial. Die Antriebs- und Arbeitsweise des Gerätes ist die gleiche wie beim Gerät gemäss Fig. 1 und 2.

Beim Gerät gemäss Fig. 4—6 ist die kreisrunde Grundplatte 12 mittels einer Welle 12d im Ständer 10 drehbar gelagert, wobei das Antriebsorgan von einer Riemenscheibe 12b' gebildet wird, die von einem Elektromotor M, beispielsweise über einen Gummiriemen, antreibbar ist. Das Auflager 13' für den zu bearbeitenden Leiter 9 umfasst drei längliche Rollen 13a, 13b, 13c, die mittels Wellen 13a', 13b', 13c' drehbar in der Grundplatte 12 gelagert sind. Was die konzentrische Anordnung des Auflagers 13' anbelangt, so gilt das Gleiche was bezüglich des Auflagers 13 gemäss Fig. 1 und 3 angeführt wurde. In der Grundplatte 12 ist ferner ein Schwenkzapfenorgan 14b' in Abstand von Auflager 13', d.h. an einer exzentrisch gelegenen Stelle, angeordnet und an diesem Schwenkzapfenorgan sind in wählbaren Abständen A, B, C von einer Referenzebene 0 drei Abisoliermesser 180, 181, 182 an ihren ersten Enden schwenkbar angeordnet, indem z.B. das Schwenkzapfenorgan 14b' mit einem Gewinde und mit aufgeschraubten Lagesicherungsmuttern versehen ist, oder indem gemäss Fig. 7 rohrförmige Abstandselemente 185A, 185B, 185C, 185D in gewünschter Länge auf das Schwenkzapfenorgan 14b' zwischen der Grundplatte 12 und zwischen den einzelnen Abisoliermessern aufgesteckt werden. Jedes Abisoliermesser ist wie ein länglicher Schwenkarm gestaltet und wird von einer eigenen Zugfeder 184 dauernd in die Ruhelage gezwungen.

Jedes Abisoliermesser weist im Bereiche des Auflagers 13' einen wirksamen Schneidkantenteil wie 180a auf und kann vorteilhafter Weise auch mit einer Reserveschneidkante 180' versehen werden, welche derart zum Einsatz gelangt, dass das Abisoliermesser in verkehrter Lage auf das Schwenkzapfenorgan 14b' aufgesteckt wird. Mittels Distanzorganen, beispielsweise in der Form von Bolzen 21a, 21b, ist eine kreisrunde Stirnplatte 22 mit gleichem Durchmesser wie die Grundplatte 12 konzentrisch in vorgewähltem axialem Abstand von der Grundplatte 12 an dieser befestigt. Hierbei sind die Wellen 13a', 13b' und 13c', die mit ihren ersten Enden in der Grundplatte 12 verankert sind, mit ihren zweiten Enden in der Stirnplatte 22 verankert. Der Bolzen 21a dient zur Verankerung der Zugfedern 184 und das Schwenkzapfenorgan 14b' wirkt also drittes Distanzorgan, indem es zusammen mit den zwei übrigen Distanzorganen (Bolzen 21a und 21b) mit Hilfe von Muttern, die mit Schraubenköpfen 14b'', 21a' und 21b' versehen sind, die Stirnplatte 22 festhält. In der Stirnplatte 22 ist eine mittige Öffnung 22a vorgesehen, die Zutritt zu dem Auflager 13' schafft.

Um die Grundplatte 12 und die Spannung 22 herum ist ein Hohlzylinderkörper oder Trommelmantel 23 frei drehbar angeordnet. Der Hohlzylinderkörper 23 hat in seinem mittleren Teil einen etwas kleineren Innendurchmesser als der Aussendurchmesser der Grund- und Stirnplatten 12, 22, ist so dass nach Anziehen der Schraubenköpfe 14b'', 21a' und 21b' der Hohlzylinderkörper 23 zwischen der Grund- und Stirnscheibe axial gesichert ist. Im Hohlzinderkörper 23 ist für jedes Abisoliermesser 180, 181, 182 ein länglicher peripherer Schlitz wie 23a' vorgesehen, und jedem Schlitz ist ein gewölbter, an den Hohlzylinderkörper 23 von aussen sich anschmiegender Schieber 24 zugeordnet. Jeder Schieber weist seinerseits einen länglichen Schlitz 24a auf, durch den eine Festhalteschraube 24b hindurchgeht, die in einer Gewindeöffnung 23d in der Wandung des Hohlzylinderkörpers 23 eingeschraubt ist. Die Schraubenköpfe 24b', die grösser als die Schlitze 24a sind, sind von aussen her zugänglich, und zur Führung des Schiebar 24 sind zumindest entlang eines Teiles des Umfanges der Aussenfläche der genannten Wandung peripher verlaufende Führungskämme 23b vorgesehen, von denen jeder mit der Seitenkante zumindest eines Schiebars 24 in Berührung steht.

Jedes Abisoliermesser weist ein freies zweites Ende wie 180b auf, welches durch den Schlitz 23a' hindurchtritt und mit einer Endkante 24c des betreffenden Schiebers 24 in mechanischem Kontakt steht. Die Endkante 24c jeden Schiebars 24 bildet ein Eingriffsglied.

Der Hohlzylinderkörper 23 erstreckt sich ein Stück jenseits der Grundplatte 12 und bilet dort eine Bremsbahn 23a für einen Bremskörper 25. Der Bremskörper 25, z.B. aus Gummi, hat die Form eines an einer Stellschraube 25a drehfest und exzentrisch angesetzten Bremsklotzes. Durch Drehen der Stellschraube 25a und nachfolgendem Sichern mittels einer Mutter 25b wird der Bremsdruck geregelt.

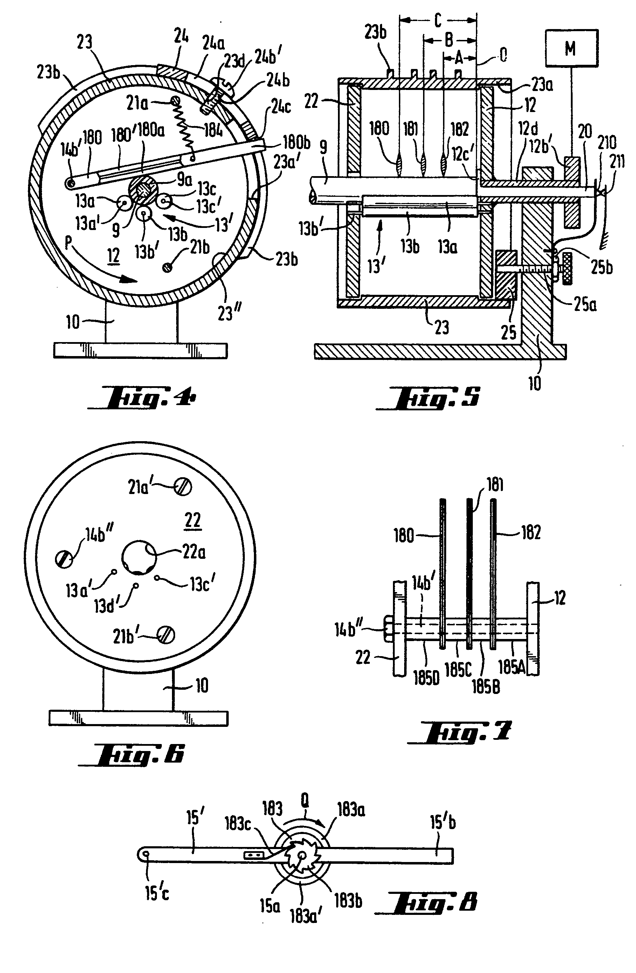

Das Gerät arbeitet in folgender Weise. Die gewünschten Abstände A, B, C werden nach Abnahme der Stirnplatte 22 eingestellt. Die Stirnplatte 22 wird wieder aufgesetzt und die für die betreffende Serie von abzuisolierenden Leitern erwünschten Einschnittendtiefen werden durch Einstellung der Schieber 24 festgelegt, nachdem die Schrauben 24b wieder festgezogen werden. Dann wird der erste Leiter 9 der Serie bis zum Anstoss an einen Endanschlag in die Öffnung 22a eingeschoben. Im Ausführungsbeispiel gemäss Fig. 5 wird das Endanschlagorgan von einer Anschlagplatte 12c' gebildet die an einem Stab 20 angeordnet ist. Die Welle 12d, welche die Grundplatte 12 trägt, is hohl ausgeführt und der Stab 20 geht durch sie hindurch und schliesst, wenn er vom Leiter 9 verschoben wird, ein Paar federnder Kontakte 210, 211, welche beispielsweise in Relais betätigen, von dem der die Riemenscheibe 12b' antriebende Motor M ein- und abgeschaltet werden kann. Die Stirnfläche der Anschlagsplatte 12c' bildet die Referenzebene 0, von der die Abstände A, B, C zu messen sind.

Die Grund- und Stirnplatten 12, 22 beginnen sich nach Einschalten des Motors M im Sinne des Pfeiles P zu drehen, wodurch die zweiten Messerenden wie 180b, welche die Eingriffglieder bilden, in Berührung mit den Endkanten 24c der Schieber 24, welche zusammen mit dem Hohlkörper 23 das Vorschuborgan bilden, gebracht werden. Dadurch werden die wirksamen Schneidkantenteile 180a der Abisoliermesser bei Überwindung der Zugkraft der Federn 184 in Berührung mit dem äusseren Umfang der Isolationsschicht 9a gebracht (Berührungslage der Abisoliermesser).

Beim Nichtvorhandensein der Bremsanordnung 23a, 25 würde als einzige weitere Folge eintreten, dass der Hohlzylinderkörper 23, von den Eingriffsgliedern 24c angetrieben, in gleiche Drehung versetzt wird wie die Grund- und Stirnplatten 12 und 22. Die mit vorgewählter Intensität (Einstellung mittels der Schraube 25a) wirkende Bremseinrichtung 23a, 25 verzögert jedoch in gewähltem Grade die Drehgeschwindigkeit des Hohlzylinderkörpers 23 gegenüber der Drehung der Grund- und Stirnplatten 12, 22. Dabei verschiebt sich die Angriffsstelle der Endkante 24c in peripherer Richtung mit der Folge, dass die Abisoliermesser 180—182 mit gewählter Geschwindigkeit in die Isolationschicht 9a eindringen, bis sie die durch vorhergehende Einstellung der Schieber 24 gewählte Einschnittsendlage erreichen, bei der jedes Abisoliermesser in vorgewähltem Ausmass in die Leiterisolation eingedrungen ist. Danach dreht sich der Hohlzylinderkörper 23 synchron mit den Grund- und Stirnplatten 12, 22 und die Messer ändern nicht mehr ihre Tiefenlage, sondern führen die früher erwähnte zumindest eine volle Umdrehung nach dem Erreichen der Einschnittsendlage durch. Die Einschnittsendlage wird somit, wie bereits erwähnt, durch die Einstellung der Schiebar 24 festgelegt, und durch die Einstellung des Bremsdruckes wird die Geschwindigkeit des Eindringens der Abisoliermesser in die Isolationsschicht (Übergang aus der Berührungslage in die Einschnittsendlage) unabhängig davon geregelt.

Nach Erreichen der Einschnittsendlage wird der Leiter also, wie angeführt, noch während zumindest einer Umdrehung im Gerät belassen, damit jeder Einschnitt entlang seines ganzen Umfanges die maximal vorgesehene Teife aufweist. Danach wird der Leiter aus dem Gerät herausgezogen, wobei der Kontakt 210 mehr als der Kontakt 211 zurückfedert und den Stab 20 und die Anschlagplatte 12c' wieder in ihre Ausgangslage bringt und gleichzeitig die elektrische Verbindung mit dem Kontakt 211 unterbricht, so dass der Antriebsmotor M abgeschaltet wird.

Die Welle 12d kann beispielsweise 4 Umdrehungen pro Sek. durchführen und ein Abisoliervorgang an einem Leiter mit einem Durchmesser von 8 mm kann etwa 5 Sek. dauern.

In Fig. 8 ist in etwas grösseren Masstab eine vorteilhafte andere Ausführungsform der Abisoliermesserorgane für das Gerät gemäss Fig. 4—7 dargestellt. Die Abisoliermesser haben die Form einer kreisrunden Scheibe 183, die entlang ihres ganzen Umfanges mit einer Schneidkante 183a versehen ist. Die Scheibe 183 ist drehfest an einem Zapfen 15a angeordnet, der drehbar an einem Trägerarm 15' gelagert ist, welcher an seinem ersten Ende 15'c am Schwenkzapfenorgan 14b' (Fig. 4) angelenkt ist, wobei sein entgegengesetztes zweites Ende 15'b dem Angriff des Eingriffsorgans 24c (Fig. 4) ausgesetzt ist. Am Zapfen 15a ist ferner ein Hemmrad 183b drehfest angeordnet, welches mit einem am Trägerarm 15' befestigten Federhebel 183c in bekannter Weise derart zusammenarbeitet, dass sich die Scheibe 183 nur in der Richtung (Pfeil Q) drehen kann, die entgegengesetzt der Richtung ist, in welcher beim Abisolieren das Messer von der Leiterisolation zufolge von Reibung in Drehung versetzt würde. Dadurch wird verbindet, dass sich ein scheibenförmiges Abisoliermesser bei Schneidevorgang abwälzt, wobei gleichzeitig ermöglicht wird, dass ein abgestumpfter wirksamer Teil 183a' der kreisrunden Schneidkanter 183a von einem anderen Teil ersetzt werden kann, indem das Messer mit der Hand in der zugelassenen Richtung um einen oder mehrere der Zähne des Hemmrades 183b verdreht wird. Die ganze Schneidkante 183a kann somit als eine Vielzahl von mit der Reserveschneide 180' (Fig. 4) funktionell vergleichbaren Reserveschneiden betrachtet werden. Die Teile 15', 183, 183b und 183c bilden zusammen das Messerorgan.

Nach Beendigung eines Schneidvorgangs muss der Leiter 9 im allgemeinen etwas in der dem Pfeile P entgegengesetzten Richtung verdreht werden, um den Eingriff der Organe 15'b und 24c zu lösen und dadurch es den Federn 184 zu ermoglichen, die Abisoliermesser aus den Einschnitten in der Isolation herauszubringen und zurück in die Ruhelage zu führen.

In Fig. 9 ist eine andere Lösung des Anschlagorganes für den Leiter 9 dargestellt. Die Welle 12d', welche die Grundscheibe 12 trägt, ist massiv und weist eine axiale Gewindeöffnung 120 auf, in die eine Stellschraube 121 mit z.B. sechskantigem Kopf 12c'', welcher einen Endanschlag bildet, eingeschraubt ist. Die Stellschraube kann mittels eines geeigneten Schlüssels — durch die Öffnung 22a (Fig. 6) hindurch, oder nach Abnahme der Stirnscheibe 22 — in gewünschtem Ausmass ein- oder ausgeschraubt werden und die Stirnfläche ihres Kopfes 12c'' bildet das eigentliche Anschlagorgan. Der Antriebsmotor M wird in diesem Falle z.B. mittels eines Fusschalters ein- und ausgeschaltet.

Im Rahmen des allgemeinen Erfindungsgedankens sind noch weitere Alternativen möglich. So können z.B. gemäss Fig. 10 die Schieber 24' und die Kämme 23b' an der inneren Wandung bzw. inneren Mantelfläche des Hohlzylinderkörpers 23 angeordnet sein, wobei die Schieber 24' anstatt der Schlitze 24a Gewindeöffnungen 24'd für die Schrauben 24b aufweisen. Die Schäfte 24b'' dieser Schrauben gehen durch die Schlitze 23a' hindurch, wobei ihre Köpfe 24b', die grösser als diese Schlitze sind, sich nach wie vor an der äusseren Mantelfläche des Hohlzylinderkörpers 23 zugänglich befinden. Es ist offensichtlich, dass in diesem Fall die Eingriffsorgane 15'b, 180b gemäss Fig. 4 und 8 sowohl vor der inneren Mantelfläche des Hohlzylinderkörpers enden, als auch in die Schlitze 23a' hinein- oder aus ihnen herausragen können.

Ferner kann die Bremsbahn 23a an der äusseren Mantelfläche des Hohlzylinderkörpers 23 liegen und beispielsweise von zwei in den Zifferblattlagen 3 und 9 neben dem Ständer 10 angeordneten Bremsklötzen mit einstellbarer Kraft beaufschlagt werden. Ferner kann das Anschlagorgan 12c' (Fig. 5) mit einem Einstellelement ähnlich dem Anschlagorgan 12c'' (Fig. 9) ergänzt werden.

Es ist auch leicht einzusehen, dass die Stirnplatte 22 nicht unbedingt erforderlich ist, denn sowohl die Wellen 13a', 13b', 13c', als auch der Hohlzylinderkörper 23 — dieser insbesondere dank seines jenseitigen, die Bremsbahn 23a tragenden Teils, der eventuell noch etwas länger gestaltet werden kann — können fliegend nur in der Grundplatte 12 gelagert sein.

**Patentansprüche**

1. Abisoliergerät für elektrische Leiter (9) kreisrunden Querschnitt, deren Isolation (9a) in einem vorgegebenen Abstand (A) vom Leiterende zu durchtrennen ist, umfassend

einen feststehenden Ständer (10);

ein im Ständer angeordnetes Tragorgan (12);

ein vom Tragorgan (12) getragenes, in Richtung der Drehachse des Tragorgans (12) sich erstreckendes längliches Auflagerorgan (13) für den zu bearbeitenden Leiter (9);

ein im genannten Abstand (A) einziges am Tragorgan (12) radial an das Auflagerorgan (13) und den darauf befindlichen Leiter (9) heranführbar gelagertes Messerorgan (18; 18'), welches einen wirksamen Schneidkantenteil (18a) aufweist und mit der Drehgeschwindigkeit des Tragorgans (12) um dessen Drehachse drehbar ist;

ein Vorschuborgan zur genannten Heranführung des Messerorgans (18; 18') an das Auflagerorgan und Einzwingen des Messerorgans in die Isolation (9a) des auf den Auflagerorgan (13) befindlichen Leiters (9) unter dessen Anpressen an das Auflagerorgan (13), und

ein Antriebsorgan (12b) für die genannte Drehbewegung, dadurch gekennzeichnet, dass das Vorschuborgan ausschliesslich von einer mittels mechanischer Kraftübertragung von der Drehbewegung des Tragorgans (12) hergeleiteten Kraft beaufschlagbar ist, welches Vorschuborgan aus einem an einer Stirnseite (10c) des Ständers (10) angeordneten Leitspursystem (17) besteht, welches mit einem mit dem Messerorgan (18; 18') verbundenen Abtaststift (16a; 16a') in Eingriff steht, wobei das Leitspursystem (17) eine äussere kreisrunde Spur (17b) eine innere kreisrunde Spur (17b) und zumindest eine Übergangsspur (17c; 17c') aufweist, welche mit gewählter Steigung die beiden kreisrunden Spuren (17a, 17b) verbindet, und dass der Abtaststift (16a; 16a') als ein Eingriffsglied mit seiner Spitze in das Leitspursystem (17 eingreift und hierbei eine Länge aufweist, die

im wesentlichen dem genannten Abstand (A) entspricht.

2. Abisoliergerät nach Patentanspruch 1, dadurch gekennzeichnet, dass das Tragorgan (12) in an sich bekannter Weise als kreisrunde Grundplatte gestaltet ist, an der das Auflagerorgan (13) zentrisch und drehfest befestigt ist, und dass das Messerorgan (18; 18') an einer exzentrisch gelegenen Stelle an diese Grundplatte angeschlossen ist.

3. Abisoliergerät nach Patentanspruch 2, dadurch gekennzeichnet, dass das Messerorgan (18) einen länglichen Schwenkarm (15) umfasst, der an seinem einen Ende an der genannten Stelle an die Grundplatte angelenkt ist.

4. Abisoliergerät nach Patentanspruch 2, dadurch gekennzeichnet, dass das Messerorgan (18') radial gleitend in einer Schwalbenschwanzführung (19) angeordnet ist, die mit der Grundplatte fest verbunden ist.

5. Abisoliergerät für elektrische Leiter (9) kreisrunden Querschnitts, deren Isolation (9a) in einem vorgegebenen Abstand von Leiterende zu durchtrennen ist, insbesondere für elektrische Leiter (9), deren Isolation in mehreren vorgegebenen Abständen (A, B, C) vom Leiterende zu durchtrennen ist, umfassend

einen feststehenden Ständer (10);

ein im Ständer (10) drehbar angeordnetes, als kreisförmige Scheibe ausgebildetes Tragorgan (12);

ein von Tragorgan (12) getragenes, in Richtung der Drehachse des Tragorgans (12) sich erstreckendes längliches Auflagerorgan (13') für den zu bearbeitenden Leiter (9);

ein im genannten Abstand (A, B, C) einziges am Tragorgan (12) radial an das Auflagerorgan (13') und den darauf befindlichen Leiter (9) heranführbar gelagertes Messerorgan (180—182; 183), welches eines wirksamen Schneidkantenteil (180a, 183a) aufweist und mit der Drehgeschwindigkeit des Tragorganes (12) um dessen Drehachse drehbar ist;

ein Vorschuborgan zu genannten Heranführung des Messerorgans (180—82; 183) an das Auflagerorgan (13') und Einzwingen des Messerorgans (180—82; 183) in die Isolation (9a) des auf dem Auflagerorgan (13') befindlichen Leiters (9) unter dessen Anpressen an das Auflagerorgan (13'), und

ein Antriebsorgan (12b', M) für die genannte Drehbewegung, dadurch gekennzeichnet, dass das Messerorgan (180—182, 183) aus einem den wirksamen Schneidkantenteil (180a; 183a) tragenden Schwenk- oder Tragarm besteht, der an seinem einen Ende an einer exzentrisch gelegenen Stelle an das Tragorgan (12) schwenkbar angeschlossen ist, dass das Vorschuborgan ausschliesslich von einer mittels mechanischer Kraftübertragung von der Drehbewegung des Tragorgans (12) hergeleiteten Kraft beaufschlagbar ist, derart, das ein am Tragorgan (12) frei drehbar angeordneter Hohlzylinderkörper (23) mit einem länglichen, peripher verlaufenden Schlitz (23a') für den Durchtritt des anderen Endes (180b) des Schwenk- oder Tragarmes vorgesehen ist, dem ein an den Hohlzylinderkörper (23) sich anschmiegender, in peripherer Richtung einstellbarer Schieber (24) zugeordnet ist, dessen in dem Bereich des genannten Schlitzes (23a') befindliche Endkante (24c) als Eingriffsglied das andere Ende des federbelasteten Schwenk- oder Tragarmes (15) beaufschlagt, und dass am Hohlzylinderkörper (23) und am Ständer (10) zusammenenbeitende Bremsorgane (23a, 25) vorgesehen sind zur Verminderung der Drehgeschwindigkeit des Hohlzylinderkörpers (23) gegenüber der Drehgeschwindigkeit des Tragorgans (12).

6. Abisoliergerät nach Patentanspruch 5, dadurch gekennzeichnet, dass in axialem Abstand von dem Tragorgan (12) mittels Distanzorgans (14'; 21, 21b) eine gleich grosse kreisrunde Stirnplatte (22) angeordnet ist, in welcher eine zentrische Zutrittsöffnung (22a) zum Auflagerorgan (13') vorgesehen ist, und dass der Hohlzylinderkörper (23) auch an dieser Stirnplatte (22) frei drehbar gelagert ist.

7. Abisoliergerät nach Patentanspruch 6, dadurch gekennzeichnet, dass eines der Distanzorgane als Schwenkzapfenorgan (14b') für das Messerorgan (180—82; 183) gestaltet ist.

8. Abisoliergerät nach einem der Patentansprüche 5—7, dadurch gekennzeichnet, dass die zusammenarbeitenden Bremsorgane einer entlang der Peripherie des Hohlzylinderkörpers (23) sich erstreckende Bremsbahn (23a) und zumindest einen mit einstellbarer Kraft auf sie einwirkenden, am Ständer (10) gelagerten Bremsklotz (25) umfassen.

9. Abisoliergerät nach einem der Patentansprüche 5—8, dadurch gekennzeichnet, dass der Schieber (24) an der Aussenseite des Hohlzylinderkörpers angeordnet ist und für die Einstellung einen länglichen Schlitz (24a) für eine im Hohlzylinderkörper (23) eingeschraubte Festhalteschraube (24b) aufweist.

10. Abisoliergerät nach einem der vorhergehenden Patentansprüche, dadurch gekennzeichnet, dass das Messerorgan (180—182; 183) einen Schneidkantenteil (180') aufweist, der nach Abnutzung des wirksamen Schneidkantenteil (180a) an dessen Stelle einsetzbar ist.

11. Abisoliergerät nach einem der vorhergehenden Patentansprüche, dadurch gekennzeichnet, dass das Messerorgan (183) als kreisrunde Scheibe gestaltet ist, deren Umfang den wirksamen Schneidkantenteil (183a') bildet, wobei die Scheibe drehbar an einem Tragarm (15') angeordnet ist.

12. Abisoliergerät nach Patentanspruch 11, gekennzeichnet durch einen Sperrmechanismus (183b, 183c), welcher eine Drehbewegung der Messerscheibe (183) gegenüber dem Tragarm (15') nur in einer Richtung zulässt.

13. Abisoliergerät nach einem der vorhergehenden Patentansprüche, gekennzeichnet durch einen einstellbaren Endanschlag (121) im Anschluss an das Auflagerorgan (13; 13').

**Revendications**

1. Appareil à dénuder pour des conducteurs électriques (9) de section droite circulaire, dont l'isolation (9a) doit être sectionnée à une distance prédéterminée (A) de l'extrémité du conducteur, comportant:
   un bâti fixe (10);
   un organe formant support (12) disposé dans le bâti;
   un organe (13) d'appui du conducteur à mettre en oeuvre (9), cet organe de profil allongé s'étendant dans la direction de l'axe de rotation de l'organe formant support (12);
   un organe formant lame (18; 18') monté à la distance précitée (A) individuellement sur l'organe formant support (12) de manière à pouvoir être rapproché radialement de l'organe d'appui (13) et du conducteur (9) situé sur lui ledit organe formant lame comportant une partie active (18a) à arête de coupe et pouvant tourner à la vitesse de rotation de l'organe formant support (12) autour de son axe de rotation;
   un organe d'avancement pour assurer le rapprochement précité de l'organe formant lame (18; 18') de l'organe d'appui et pour enfoncer l'organe formant lame dans l'isolation (9a) du conducteur (9) situé sur l'organe d'appui (13) sous l'effet de sa compression contre l'organe d'appui (13), et
   un organe d'entraînement (12b) pour le mouvement de rotation précité, caractérisé en ce que l'organe d'avancement peut être sollicité exclusivement par une force dérivée, au moyen d'une transmission de force mécanique, du mouvement de rotation de l'organe formant support (12), cet organe d'avancement se composant d'un système à voies directrices (17) disposé sur un côté frontal (10c) du bâti (10) et qui est en prise avec une broche de palpage (16a; 16a'), reliée à l'organe formant lame (18; 18'), le système à voies directrices (17) comportant une voie extérieure circulaire (17a), une voie intérieure circulaire (17b) et au moins une voie de transition (17c; 17c'), qui relie avec une pente sélectionnée les deux voies circulaires (17a, 17b), et en ce que la broche de palpage (16a; 16a') s'engage par sa pointe, comme un organe d'entraînement, dans le système à voies directrices (17) et possède à cet effet une longueur qui correspond sensiblement à la distance d'espacement (A) précitée.

2. Appareil à dénuder selon la revendication 1, caractérisé en ce que l'organe formant support (12) est agencé d'une manière connue comme une plaque de base de forme circulaire, sur laquelle est fixé l'organe d'appui (13) de façon centrée et sans possibilité de rotation relative et en ce que l'organe formant lame (18, 18') est relié, dans une zone située excentriquement, avec cette plaque de base.

3. Appareil à dénuder selon la revendication 2, caractérisé en ce que l'organe formant lame (18) comporte un bras pivotant allongé (15), qui est articulé par une de ses extrémités sur la zone précitée de la plaque de base.

4. Appareil à dénuder selon la revendication 2,

7

caractérisé en ce que l'organe formant lame (18')
est disposé de façon à coulisser radialement dans
une guide en queue d'aronde (19), qui est relié
rigidement à la plaque de base.

5. Appareil à dénuder pour des conducteurs
électriques (9) de section droite circulaire, dont
l'isolation (9a) doit être sectionnée à une distance
prédéterminée de l'extrémité du conducteur,
notamment pour des conducteurs électriques (9)
dont l'isolation doit être sectionnée à plusieurs
distances prédéterminées (A, B, C) de l'extrémité
du conducteur, comprenant:
   un bâti fixe (10);
   un organe formant support (12), agencé comme
un disque de forme circulaire et monté de façon
tournante dans le bâti (10);
   un organe allongé (13) d'appui pour le conducteur à conditionner (9), cet organe étant porté par
l'organe formant support (12) et s'étendant dans
la direction de l'axe de rotation de l'organe
formant support (12);
   un organe formant lame (180—182; 183) monté
individuellement à l'espacement précité (A, B, C)
sur l'organe formant support (12) et pouvant être
rapproché radialement de l'organe d'appui (13')
et du conducteur (9) situé sur lui, ledit organe
formant lame comportant une partie active à
arête de coupe (180a; 183a) et pouvant tourner à
la vitesse de rotation de l'organe formant support
(12) autour de son axe de rotation;
   un organe d'avancement pour produire le rapprochement précité de l'organe formant lame
(180—182; 183) de l'organe d'appui (13') et pour
enfoncer l'organe formant lame (180—182; 183)
dans l'isolation (9a) du conducteur (9) situé sur
l'organe d'appui (13') sous l'effet de sa compression contre l'organe d'appui (13'), et
   un organe d'entraînement (12b', M) pour le
mouvement de rotation précité, caractérisé en ce
que l'organe de mesure (180—182; 183) se composé d'un bras pivotant ou porteur qui porte la
partie active à arête de coupe (180a; 183a) et qui
est relié de façon pivotante par une de ses
extrémités avec l'organe porteur (12) en un
endroit situé excentriquement, en ce que l'organe
d'avancement peut être sollicité exclusivement
par une force dérivée, au moyen d'une transmission de force mécanique, du mouvement de
rotation de l'organe porteur (12) de telle sorte
qu'un corps cylindrique creux (23), disposé de
façon à pouvoir tourner librement sur l'organe
porteur (12) soit pourvu d'une fente (23a') s'étendant sur la périphérie et de profil allongé pour le
passage de l'autre extrémité (180b) du bras pivotant ou porteur, auquel est associé un poussoir
(24), s'appliquant contre le corps cylindrique
creux (23), réglable dans une direction périphérique et dont le bord extrême (24c), situé dans la
zone de la fente précitée (23a'), agit, comme
organe d'actionnement, sur l'autre extrémité du
bras pivotant ou porteur (15) sollicité par ressort,
et en ce qu'il est prévu sur le corps cylindrique
creux (23) et sur le bâti (10) des organes de
freinage (23a, 25) coopérant l'un avec l'autre pour
réduire la vitesse de rotation du corps cylindrique creux (23) par rapport à la vitesse de rotation de
l'organe formant support (12).

6. Appareil à dénuder selon la revendication 5,
caractérisé en ce qu'il est prévu une plaque
frontale (22), écartée axialement de l'organe formant support (12) au moyen d'organes d'espacement (14'; 21, 21b), cette plaque ayant une forme
circulaire de même grandeur et dans laquelle il
est prévu une ouverture centrale (22a) d'accès à
l'organe formant support (13') et en ce que le
corps cylindrique creux (23) est également monté
de façon librement tournante sur la plaque frontale (22).

7. Appareil à dénuder selon la revendication 6,
caractérisé en ce qu'un des organes d'espacement est agencé comme un organe formant
tourillon de pivotement (14b') pour l'organe formant lame (180—182; 183).

8. Appareil à dénuder selon une des revendications 5 à 7, caractérisé en ce que les organes de
freinage coopérants comportent une voie de freinage (23a) s'étendant le long de la périphérie du
corps cylindrique creux (23) et au moins un sabot
de frein (25) monté sur le bâti (10) et agissant avec
une force réglable sur ladite voie.

9. Appareil à dénuder selon une des revendications 5 à 8, caractérisé en ce que le poussoir (24)
est disposé sur le côté extérieur du corps cylindrique creux et comporte, pour le réglage, une fente
allongée (24a) pour une vis de blocage (24b)
vissée dans le corps cylindrique creux (23).

10. Appareil à dénuder selon une des revendications précédentes, caractérisé en ce que l'organe formant lame (180—182; 183) comporte une
partie à arête de coupe (180') qui, après usure de
la partie active à arête de coupe (180a), peut être
utilisée à sa place.

11. Appareil à dénuder selon une des revendications précédentes, caractérisé en ce que l'organe formant lame (183) est agencée comme un
disque de forme circulaire, dont le pourtour constitué la partie active à arête de coupe (183a'), le
disque étant monté de façon tournante sur un
bras porteur (15').

12. Appareil à dénuder selon la revendication
11, caractérisé par un mécanisme de verrouillage
(183b, 183c), qui autorise un mouvement de
rotation du disque formant came (183) par rapport au bras porteur (15') seulement dans une
direction.

13. Appareil à dénuder selon une des revendications précédentes, caractérisé en ce qu'il est
prévu un butée d'extrémité réglable (121) en
liaison avec l'organe d'appui (13; 13').

**Claims**

1. Insulation stripping apparatus for electrical
conductors (9) of circular cross-section and
whose insulation (9a) is to be severed at a
predetermined spacing (A) from the end of the
conductor, comprising
   a stationary stand (10);
   a carrier member (12) arranged in the stand;
   an elongate support member (13) which is carried by the carrier member (12) and which extends in the direction of the axis of rotation of the carrier member (12), for the conductor (9) to be processed;

a single knife member (18; 18') at said spacing (A), which is mounted on the carrier member (12) in such a way that it can be moved radially towards the support member (13) and the conductor (9) disposed thereon and which has an effective cutting edge portion (18a) and which is rotatable with the same speed of rotation as the carrier member (12) about the axis of rotation thereof;

a feeding member for producing said movement of the knife member (18; 18') towards said support member and for forcing the knife member into the insulation (9a) of the conductor (9) disposed on the support member (13), with the conductor being pressed against the support member (13), and

a driving member (12b) for producing said rotary movement, characterised in that the feeding member can be acted upon exclusively by a force derived by means of mechanical force transmission from the rotary movement of the carrier member (12), which feeding member comprises a guide track system (17) which is arranged on a face (10c) of the stand (10) and which is an engagement with a tracer pin (16a; 16a') which is connected to the knife member (18; 18'), wherein the guide track system (17) has an outer circular track (17b), an inner circular track (17b) and at least one transfer track (17c; 17c') which with a selected inclination connects the two circular tracks (17a, 17b) and that the tracer pin (16a; 16a') is in the form of an engagement member engaging with its tip into the guide track system (17) and in that connection is of a length which substantially corresponds to said spacing (A).

2. Insulation stripping apparatus according to claim 1 characterised in that the carrier member (12) is in per se known manner in the form of a circular base plate (12) to which the support member (13) is centrally and non-rotatably secured and that the knife member (18; 18') is connected to the base plate at an eccentrically situated location.

3. Insulation stripping apparatus according to claim 2 characterised in that the knife member (18) includes an elongate pivotal arm (15) which at its one end is pivotally connected to the base plate at said location.

4. Insulation stripping apparatus according to claim 2 characterised in that the knife member (18') is radially slidably arranged in a dovetail guide (19) which is fixedly connected to the base plate.

5. Insulation stripping apparatus for electrical conductors (9) of circular cross-section and whose insulation (9a) is to be severed at a predetermined spacing from the end of the conductor, in particular for electrical conductors (9) whose insulation is to be severed at a plurality of predetermined spacings (A, B, C) from the end of the conductor, comprising

a stationary stand (10);

a carrier member (12) which is rotatably arranged in the stand (10) and which is in the form of a circular disc;

an elongate support member (13') which is carried by the carrier member (12) and which extends in the direction of the axis of rotation of the carrier member (12), for the conductor (9) to be processed;

a single knife member (180—182; 183) at said spacing (A, B, C), which is mounted on the carrier member (12) in such a way that it can be moved radially towards the support member (13') and the conductor (9) disposed thereon and which has an effective cutting edge portion (180a; 183a) and is rotatable at the speed of rotation of the carrier member (12) about the axis of rotation thereof;

a feeding member for producing said movement of the knife member (180—182; 183) towards the support member (13') and forcing the knife member (180—182; 183) into the insulation (9a) of the conductor (9) disposed on the support member (13'), with the conductor being pressed against the support member (13'), and

a driving member (12b', M) for producing said rotary movement, characterised in that the knife member (180—182; 183) comprises a pivotal or carrier arm which carries the effective cutting edge portion (180a; 183a) and which at its one end is pivotably connected to the carrier member (12) at an eccentrically located situation, that the feeding member can be acted upon exclusively by a force derived by means of mechanical force transmission from the rotary movement of the carrier member (12) in such a way that a hollow cylindrical body (23) which is freely rotatably arranged on the carrier member (12) is provided with an elongate, peripherally extending slot (23a') for the passage therethrough of the other end (180b) of the pivotal or carrier arm with which there is associated a sliding member (24) which is disposed closely against the hollow cylindrical body (23) and which is adjustable in the peripheral direction and whose terminal edge (24c) which is disposed in the region of said slot (23a') acts as an engagement member on the other end of the spring-loaded pivotal or carrier arm (15), and that provided on the hollow cylindrical body (23) and the stand (10) are co-operating brake members (23a, 25) for reducing the speed of rotation of the hollow cylindrical body (23) relative to the speed of rotation of the carrier member (12).

6. Insulation stripping apparatus according to claim 5 characterised in that disposed at an axial spacing from the carrier member (12) by means of spacer elements (14'; 21, 21b) is a circular front plate (22) of the same size and in which there is provided a central admission opening (22a) for the support member (13'), and that the hollow cylindrical body (23) is also freely rotatably mounted at said front plate (22).

7. Insulation stripping apparatus according to claim 6 characterised in that one of the spacer elements is in the form of a pivot pin member (14b') for the knife member (180—182; 183).

8. Insulation stripping apparatus according to one of claims 5 to 7 characterised in that the co-operating brake members comprise a brake track (23a) extending along the periphery of the hollow cylindrical body (23) and at least one brake shoe (25) which acts with a settable force on the brake track and which is mounted on the stand (10).

9. Insulation stripping apparatus according to one of claims 5 to 8 characterised in that the sliding member (24) is arranged on the outside of the hollow cylindrical body and for setting purposes is provided with an elongate slot (24a) for a fixing screw (24b) which is screwed into the hollow cylindrical body (23).

10. Insulation stripping apparatus according to one of the preceding claims characterised in that the knife member (180—182; 183) has a cutting edge portion (180') which after the effective cutting edge portion (180a) has been worn away, can be brought into use in place thereof.

11. Insulation stripping apparatus according to one of the preceding claims characterised in that the knife member (183) is in the form of a circular disc whose periphery forms the effective cutting edge portion (183a'), the disc being rotatably arranged on a carrier arm (15').

12. Insulation stripping apparatus according to claim 11 characterised by a locking mechanism (183b, 183c) allowing a rotary movement of the knife disc (183) relative to the carrier arm (15') only in one direction.

13. Insulation stripping apparatus according to one of the preceding claims characterised by an adjustable end stop (121) co-operating with the support member (13; 13').

*Fig. 1*

*Fig. 2*

*Fig. 3*

*Fig. 9*

*Fig. 10*

**Fig. 4**

**Fig. 5**

**Fig. 6**

**Fig. 7**

**Fig. 8**